Europäisches Patentamt

European Patent Office

Office européen des brevets

(19)

(11) **EP 0 859 149 A2**

(12) **EUROPÄISCHE PATENTANMELDUNG**

(43) Veröffentlichungstag:
   **19.08.1998 Patentblatt 1998/34**

(51) Int. Cl.⁶: **F02P 5/15**

(21) Anmeldenummer: **97120965.5**

(22) Anmeldetag: **28.11.1997**

(84) Benannte Vertragsstaaten:
   **AT BE CH DE DK ES FI FR GB GR IE IT LI LU MC NL PT SE**
   Benannte Erstreckungsstaaten:
   **AL LT LV MK RO SI**

(30) Priorität: **15.02.1997 DE 19705900**

(71) Anmelder:
   **Mannesmann VDO Aktiengesellschaft**
   **60388 Frankfurt/M. (DE)**

(72) Erfinder:
   • **Horst, Stefan**
     **60389 Frankfurt (DE)**
   • **Kessler, Ulrich**
     **61440 Oberursel (DE)**
   • **Weber, Martin**
     **60318 Frankfurt (DE)**
   • **Weingärtner, Reiner**
     **65817 Eppstein (DE)**

(74) Vertreter:
   **Rassler, Andrea, Dipl.-Phys.**
   **Kruppstrasse 105**
   **60388 Frankfurt (DE)**

(54) **Verfahren zur Regelung des Zündzeitpunktes einer Brennkraftmaschine**

(57) Zur Regelung des Zündzeitpunktes wird mittels eines Drucksensors der Gesamtdruckverlauf über dem Kurbelwinkel im Zylinder einer Brennkraftmaschine festgestellt und dieser Gesamtdruckverlauf in vier Teilbereiche unterteilt, die von dem Kurbelwinkel -180° bis zu einem am Prüfstand festgelegten Integrationswinkel ($\alpha$), von diesem Integrationswinkel bis zum oberen Totpunkt, vom oberen Totpunkt bis zu dem positiven Integrationswinkel ($\alpha$) und von diesem Winkel bis zum Kurbelwinkel 180° reichen. Der Integrationswinkel ($\alpha$) hat einen fest definierten Abstand zum Verbrennungsschwerpunkt (S), der den Zustand angibt, bei welchem die Hälfte der Frischladung verbrannt ist. Im drehzahl- und lastunabhängigen Idealfall liegt der Zündwinkel an der Stelle des Verbrennungsdruck-Schwerpunktes, wobei in diesem Falle, die sich aus dem Verbrennungsdruckverlauf vom oberen Totpunkt bis zum Integrationswinkel ($\alpha$) ergebende Teilfäche (A1) der Teilfläche, die sich aus dem Verbrennungsdruckverlauf ergibt, entspricht, welche vom Integrationswinkel ($\alpha$) bis zum Kurbelwinkel 180° reicht. Um die Drehzahl- und Lastabhängigkeit zu berücksichtigen, wird die zweite Teilfläche (A2) mit einem drehzahl- und lastabhängigen Faktor Fa multipliziert, der am Prüfstand ermittelt wird.

Figur 2

EP 0 859 149 A2

**Beschreibung**

Die Erfindung bezieht sich auf ein Verfahren zur Regelung des Zündzeitpunktes einer Brennkraftmaschine mit kennfeldgesteuerter Zündwinkeleinstellung.

Die derzeitigen Regelungssysteme für Brennkraftmaschinen sind mit einer kennfeldgesteuerten Zündwinkelvorsteuerung ausgestattet. Um den optimalen Wirkungsgrad für alle Betriebspunkte, alle Alterungs- und Umweltzustände einer Brennkraftmaschine erreichen zu können, ist die Regelung des Zündzeitpunktes bzw. des Zündwinkels notwendig. Ein Kriterium für die Ermittlung des optimalen Zündwinkels ist die Lage des Verbrennungsschwerpunktes. Der Verbrennungsschwerpunkt ist der Punkt, an dem die Hälfte der Frischladung verbrannt ist.

Die Ermittlung des Verbrennungsschwerpunktes ist ausgehend von einem Signal eines Brennraumdrucksensors streng genommen nur über komplizierte und besonders aufwendige Rechenverfahren möglich, was zwar auf dem Prüfstand durchgeführt werden kann, was aber wegen des hohen Aufwandes, insbesondere aus Kostengründen, für die Regelung einer in Kraftfahrzeugen eingebauten serienmäßigen Brennkraftmaschine nicht durchgeführt werden kann.

Aufgabe der Erfindung ist es, ein Verfahren für eine einfache Berechnung des Zündzeitpunktes unter Einbeziehung des Verbrennungsschwerpunktes anzugeben, um hieraus bei geringem technischen Aufwand den Zündzeitpunkt bei serienmäßigen Brennkraftmaschinen im Betrieb in Kraftfahrzeugen regeln zu können.

Diese Aufgabe wird bei einem Verfahren der Eingangs genannten Art erfindungsgemäß dadurch gelöst, daß für jeden Brennkraftmaschinentyp im Prüfstandbetrieb durch entsprechende Wahl des Zündwinkels ein konstanter Verbrennungsschwerpunkt eines jeden Zylinders auf einen für diese Brennkraftmaschine idealen Wert eingestellt wird, daß für jeden Zylinder mittels eines im Zylinder angeordneten Drucksensors über den gesamten Arbeitsbereich sowohl der Kompressionsdruckverlauf als auch der Gesamtdruckverlauf festgestellt und hieraus die Fläche des Verbrennungsdruckverlaufes und weiterhin die Lage des Verbrennungsdruckschwerpunkts für das ganze Drehzahlenkennfeld ermittelt und ein mittlerer Winkelabstand dieses Verbrennungsdruckschwerpunktes vom oberen Totpunkt und damit vom Verbrennungsschwerpunkt festgelegt wird, der in einem weiteren Prüfstandbetrieb bei veränderlichen Lastbedingungen als festgelegter Integrationswinkel ($\alpha$) als Berechnungsgrenzen für die iterative Integrationsberechnung von vier Teilflächen (I - IV) dient, von denen die erste Teilfläche (I) vom Kurbelwinkel -180° bis zum negativen Integrationswinkel (-$\alpha$), die zweite Teilfläche (II) vom negativen Integrationswinkel (-$\alpha$) bis zum oberen Totpunkt, die dritte Teilfläche (III) vom oberen Totpunkt bis zum positiven Integrationswinkel (+$\alpha$) und die vierte Teilfläche (IV) vom positiven Integrationswinkel (+$\alpha$) bis zum Kurbelwinkel +180° reicht, worauf aus den vier Teilflächen, die zu beiden Seiten des Verbrennungsschwerpunktes liegenden Flächen (A1, A2) des Verbrennungsdruckverlaufes nach den Formeln A1 = III - II und A2 = IV - I, bestimmt werden, wobei nach der Formel A1 = A2 x Fa ein Formfaktor (Fa) bestimmt wird, der die Drehzahl- und Lastabhängigkeit ausdrückt, woraus sich aus der Formel A1 = A2 x Fa = $\alpha$, der jeweilige Winkelabstand des Verbrennungsdruckschwerpunktes vom oberen Totpunkt und damit der Winkelabstand vom Verbrennungsschwerpunkt ergibt, daß nach Abspeicherung des aus dem zweiten Prüfstandbetrieb gewonnenen Formfaktors (Fa) in das für diese Brennkraftmaschine festgelegte Kennfeld für den Betrieb von Serienmaschinen ein Korrekturfaktor für das Kennfeld vorliegt, der die bei der iterativen Integrationsberechnung der vier Teilflächen während des Betriebs von Serienmaschinen unter Verwendung des aus dem ersten Prüfstand gewonnenen Integrationswinkels ($\alpha$) festgestellte Lage des momentanen Verbrennungsdruckschwerpunktes nach der Formel A1 = A2 x Fa auf die durch den Prüfstandbetrieb festgelegte Sollage durch entsprechende Veränderung des Zündwinkels einzustellen gestattet.

Die Erfindung beruht auf der Erkenntnis, daß der Verbrennungsschwerpunkt idealerweise eine konstante Lage einnimmt und Drehzahl- und Lastunabhängig ist, weshalb er ein Kriterium zur Einstellung des idealen Zündwinkels bildet. Die vorliegende Erfindung beruht demnach auf zwei grundlegenden Überlegungen. Die erste besteht darin, die Zündung, wie bisher üblich zumindest über Last und Drehzahl vorzusteuern und dann angelehnt an den Verbrennungsschwerpunkt zu korrigieren, weil über die Lage des Verbrennungsschwerpunktes am genauesten der optimale Zündzeitpunkt in bezug auf günstige Abgaswerte und den spezifischen Verbrauch sogar für jeden einzelnen Zylinder eingestellt werden kann. Die zweite grundlegende Überlegung besteht darin, daß der hohe technische Aufwand, der zur Berechnung des genauen Verbrennungsschwerpunktes notwendig ist, für jeden Maschinentyp nur im Prüfstandbetrieb durchgeführt wird und daß aus diesem Prüfstandbetrieb ein Formfaktor ermittelt wird, der in die bisher übliche Kennfeldsteuerung eingebracht wird, so daß es mit einfachen technischen Ausrüstungen möglich ist bei Serienmaschinen im Kraftfahrzeugbetrieb die notwendigen Berechnungen und Korrekturen durchzuführen. Der hierfür notwendige Aufwand besteht in einem Drucksensor je Maschinenzylinder und einer verhältnismäßig einfachen Elektronik, z.B. bestehend aus einem Multiplexer und einem Signalverstärker. Das so aufbereitete Signal enthält den jeweiligen Druckverlauf des aktuell gezündeten Zylinders. Dieses Signal wird in den Eingang der elektronischen Motorsteuerung eingespeist und mittels des oben erläuterten Verfahrens ausgewertet. Hierdurch ist eine Regelung des Zündwinkels in Anlehnung an den Verbrennungsschwerpunkt mit vertretbarem Aufwand für Serienfahrzeuge möglich.

In vorteilhafter Ausgestaltung der Erfindung kann eine willkürliche Abweichung vom konstanten Verbrennungsschwerpunkt im Formfaktor-Kennfeld abgelegt werden. Ebenso ist es möglich, die willkürliche Abweichung vom konstanten Verbrennungsschwerpunkt in einem separaten Verbrennungsschwerpunkt-Offset-Kennfeld abzulegen.

Treten Klopfereignisse in einem Zylinder auf, so ist es in Weiterbildung der Erfindung vorteilhaft, daß bei Klopferscheinungen die auf den Verbrennungsschwerpunkt abgestellte Zündzeitpunktregelung ausgesetzt, aber im Hintergrund weitergeführt wird und daß diese Regelungen nach Behebung der Klopferscheinung wieder fortgeführt wird. Während dieses Aussetzungszeitraumes wird die erfindungsgemäße Regelung durch eine Anti-Klopf-Regelung ersetzt. Sobald wieder klopffreier Betrieb vorliegt, wird die Regelung wieder in erfindungsgemäßer Weise fortgesetzt.

Die Erfindung wird nachfolgend anhand eines in der Zeichnung dargestellten Beispieles näher erläutert. In der Zeichnung zeigen:

**Figur 1:** eine grafische Darstellung der Brennstoff-Umsatzrate in bezug auf den Kurbelwinkel;

**Figur 2:** den Druckverlauf in einem Zylinder einer Brennkraftmaschine in Abhängigkeit vom Kurbelwinkel; und

**Figur 3:** eine schematische Darstellung einer Regelungsanordnung für eine vierzylindrige Brennkraftmaschine.

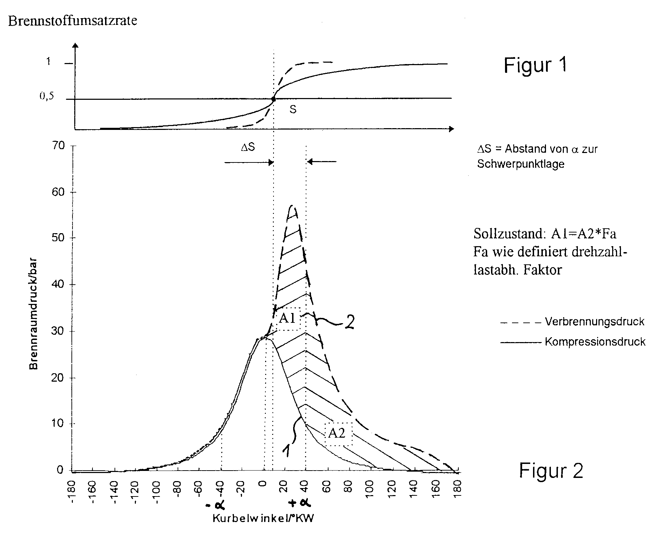

In der Zeichnung sind die Figuren 1 und 2 übereinandergezeichnet, um die Zuordnung der Brennstoffumsatzrate zum Druckverlauf deutlicher zu veranschaulichen.

Aus Figur 1 ist ersichtlich, daß der Verbrennungsschwerpunkt S beim Kurbelwinkel 8° liegt. Dieser Verbrennungsschwerpunkt, der unabhängig von der Drehzahl und der Last ist, gibt denjenigen Zustand an, bei welchem die Hälfte der Frischladung bereits verbrannt ist.

In Figur 2 ist mit 1 der Kompressionsdruckverlauf und mit 2 die Kurve des Gesamtdruckverlaufes bezeichnet, die eine Addition des Kompressionsdruckverlaufes und des Verbrennungsdruckverlaufes darstellt. Aus diesen Flächen läßt sich der Schwerpunkt des Verbrennungsdruckes bestimmen, der in einem bestimmten Zusammenhang mit dem Verbrennungsschwerpunkt steht. Hierfür zeigt die vorliegende Erfindung einen einfachen Berechnungsweg auf.

Bei einer Brennkraftmaschine wird auf dem Prüfstand, wo geeignete Meßeinrichtungen im Gegensatz zu einer Serienmaschine vorliegen, zunächst der Verbrennungsschwerpunkt festgelegt. Hierbei wird der Zündwinkel solange verändert, bis man den Verbrennungsschwerpunkt auf einem gewünschten Wert festgelegt hat, wobei dieser Wert vorzugsweise bei 8° Kurbelwinkel liegt. Hierauf wird das gesamte Kennfeld abgefahren, d.h. es werden die einzelnen Drehzahlbereiche und Lastbereiche abgefahren und dabei der jeweilige Verbrennungsdruckschwerpunkt durch Integration der in Figur 2 aufgezeigten Flächen berechnet. Der Verbrennungsdruckschwerpunkt befindet sich dabei bei einem Kurbelwinkel, bei dem die Flächen A1 und A2 gleich groß sind. Aus diesem Versuch wird dann ein statistisches Mittel für die Winkellage des Verbrennungsdruckschwerpunktes bestimmt. Im vorliegenden Beispiel liegt der Verbrennungsdruckschwerpunkt bei einem Kurbelwinkel von 40°. Dieser Wert wird nachfolgend als Integrationswinkel $\alpha$ bezeichnet. Dieser Integrationswinkel dient zur Einteilung der in Figur 2 dargestellten Flächen in vier Bereiche zur integralen Flächenberechnung. Die einzelnen Bereiche teilen sich wie folgt auf:

Integral I:     180° +/- $\Delta$1 Kurbelwinkel vor oberer Totpunkt bis Integrationswinkel vor oberer Totpunkt.

Integral II:    Integrationswinkel $\alpha$ vor oberer Totpunkt bis oberer Totpunkt.

Integral III:   Oberer Totpunkt bis Integrationswinkel $\alpha$ nach oberer Totpunkt.

Integral IV:    Integrationswinkel $\alpha$ nach oberer Totpunkt bis 180° +/- $\Delta$2 Kurbelwinkel nach oberer Totpunkt.

Das Drucksignal wird beginnend mit Bereich I stückweise über alle vier Bereiche I bis IV integriert. Die einzelnen Ergebnisse der Teilintegration werden zwischengespeichert.

Aus diesen vier Integralen läßt sich die Lage des Verbrennungsdruckschwerpunktes berechnen und zwar ergeben sich die Flächen A1 und A2 aus nachfolgenden Formeln:

$$A1 = III - II$$

$$A2 = IV - I$$

Die Lage des Verbrennungsdruckschwerpunktes ergibt sich aus A1 = A2. Bei $\Delta$1 und $\Delta$2 handelt es sich um gegebenenfalls geringfügige, insbesondere meßtechnische Abweichungen in der Größenordnung von 0 bis 10%. In der Regel ist keine Abweichung vorhanden.

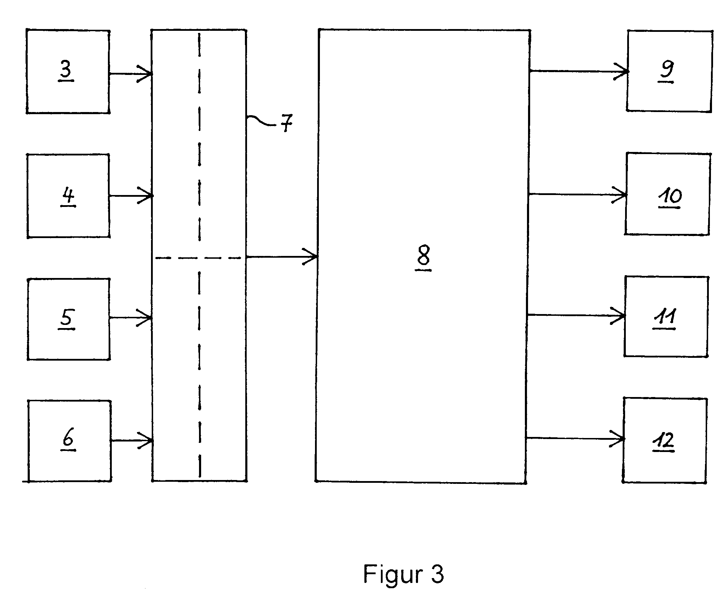

Mit dem weiter oben festgelegten Integrationswinkel $\alpha$ wird das gesamte Kennfeld und zwar drehzahl- und lastabhängig abgefahren und zwar unter Beibehaltung des Verbrennungsschwerpunktes bei einem Kurbelwinkel von 8°. Der Integrationswinkel $\alpha$ wird dabei als konstant angesehen, da die Lasterfassung auf einem festen Integrationswinkel basiert. Bei diesem zweiten Prüfstandversuch, der auch die Lastabhängigkeit berücksichtigen kann, wird dann ein Formfaktor ermittelt. Für die Betriebspunkte, an denen der festgelegte Integrationswinkel gleich dem gemessenen ist, gilt $A1 = A2$, d.h. der Verbrennungsschwerpunkt liegt im Abstand $\Delta S$ vor dem Schwerpunkt des Verbrennungsdruckes, wobei in diesem Falle der Winkelabstand dem Integrationswinkel $\alpha$ entspricht. Bei allen anderen Betriebspunkten wird das Verhältnis $A1/A2 = Fa$ gemessen, wobei Fa den Formfaktor bildet, der in einem Drehzahl-Last-Kennfeld abgelegt wird. Hierdurch erhält man ein Kennfeld für diesen Typ der Brennkraftmaschine, welches in der Steuerelektronik der Serienmaschine abgelegt wird und eine Steuerung des Zündwinkels im Serienbetrieb ermöglicht. Hierbei wird in Figur 3 jedem Zylinder, beispielsweise einer vierzylindrigen Brennkraftmaschine ein Drucksensor 3 bis 6 zugeordnet. Die entsprechenden Signale werden einem Multiplexer und Signalverstärker 7 zugeleitet, der zumindest die vier Signale zusammenfaßt und dieses Gesamtsignal einer Steuerelektronik 8 für die Brennkaftmaschine zuführt. Multiplexer und Signalverstärker 7 können auch mehrfach vorhanden sein und dann den einzelnen Zylindern oder Gruppen von Zylindern zugeordnet werden (gestrichelte Linien). Bei dieser Zusammenfassung der Signale werden alle Zylinder gleichrangig behandelt. Selbstverständlich ist es aber auch möglich, jeden Zylinder separat anzusteuern. Die Steuerelektronik 8 erhält noch über eine Kurbelwinkelerfassungseinrichtung 9 ein entsprechendes Signal und ist in der Lage, die vier Integralbereiche I bis IV zu berechnen, und hieraus unter Beibehaltung des in den Versuchen festgelegten Integrationswinkels $\alpha$ den momentanen Formfaktor Fa entsprechend der Formel $Fa = A1/A2$ zu berechnen und mit dem im Kennfeld abgespeicherten Formfaktor Fa zu vergleichen und damit die Korrektur des Zündwinkels über eine entsprechende Einrichtung 10 vorzunehmen. Mit 11 ist ein Stellglied für die Kraftstoffeinspritzung und mit 12 ein Drosselklappenstellglied bezeichnet, die von der Steuerelektronik 8 angesteuert werden.

**Patentansprüche**

1. Verfahren zur Regelung des Zündzeitpunktes einer Brennkraftmaschine mit einer kennfeldgesteuerten Zündwinkeleinstellung, **dadurch gekennzeichnet,** daß für jeden Brennkraftmaschinentyp im Prüfstandbetrieb durch entsprechende Wahl des Zündwinkels ein konstanter Verbrennungsschwerpunkt eines jeden Zylinders auf einen für diese Brennkraftmaschine idealen Wert eingestellt wird, daß für jeden Zylinder mittels eines im Zylinder angeordneten Drucksensors im lastfreien Betrieb sowohl der Kompressionsdruckverlauf als auch der Gesamtdruckverlauf festgestellt und hieraus die Fläche des Verbrennungsdruckverlaufes und weiterhin die Lage des Verbrennungsdruckschwerpunkts für das ganze Drehzahlenkennfeld ermittelt und ein mittlerer Winkelabstand dieses Verbrennungsdruckschwerpunktes vom oberen Totpunkt festgelegt wird, der in einem weiteren Prüfstandbetrieb bei veränderlichen Last- und/oder Drehzahlbedingungen als festgelegter Integrationswinkel ($\alpha$) als Berechnungsgrenzen für die iterative Integrationsberechnung von vier Teilflächen (I bis IV) dient, von denen die erste Teilfläche (I) vom Kurbelwinkel - 180° bis zum negativen Integrationswinkel (-$\alpha$), die zweite Teilfläche (II) vom negativen Integrationswinkel (-$\alpha$) bis zum oberen Totpunkt, die dritte Teilfläche (III) vom oberen Totpunkt bis zum positiven Integrationswinkel (+$\alpha$) und die vierte Teilfläche (IV) vom positiven Integrationswinkel (+$\alpha$) bis zum Kurbelwinkel + 180° reicht, worauf aus den vier Teilflächen die zu beiden Seiten des Verbrennungsschwerpunktes liegenden Flächen (A1, A2) des Verbrennungsdruckverlaufes nach den Formeln $A1 = III - II$ und $A2 = IV - I$, bestimmt werden, wobei nach der Formel $A1 = A2 \times Fa$ ein Formfaktor (Fa) bestimmt wird, der die Drehzahl- und Lastabhängigkeit ausdrückt, woraus sich aus der Formel $A1 = A2 \times Fa = \alpha$, der jeweilige Winkelabstand des Verbrennungsdruckschwerpunktes vom oberen Totpunkt und damit der Winkelabstand vom Verbrennungsschwerpunkt ergibt, daß nach Abspeicherung des aus dem zweiten Prüfstandbetrieb gewonnenen Formfaktors (Fa) in das für diese Brennkraftmaschine festgelegte Kennfeld für den Betrieb von Serienmaschinen ein Korrekturfaktor für das Kennfeld vorliegt, der die bei der iterativen Integrationsberechnung der vier Teilflächen (I bis IV) während des Betriebs von Serienmaschinen unter Verwendung des aus dem ersten Prüfstandbetrieb gewonnen Integrationswinkel ($\alpha$) festgestellte Lage des momentanen Verbrennungsdruckschwerpunktes nach der Formel $A1 = A2 \times Fa$ auf die durch den Prüfstandbetrieb festgelegte Sollage durch entsprechende Veränderung des Zündwinkels einzustellen gestattet.

2. Verfahren nach Anspruch 1, **dadurch gekennzeichnet,** daß willkürliche Abweichungen vom konstanten Verbrennungsschwerpunkt im Formfaktor-Kennfeld abgelegt wird.

3. Verfahren nach Anspruch 1, **dadurch gekennzeichnet,** daß willkürliche Abweichungen vom konstanten Verbrennungsschwerpunkt in einem speparaten Verbrennungsschwerpunkt-Offset-Kennfeld abgelegt werden.

4. Verfahren nach einem der Ansprüche 1 bis 3, **dadurch gekennzeichnet,** daß bei Klopferscheinungen die auf den Verbrennungsschwerpunkt abgestellte Zündzeitpunktregelung ausgesetzt, aber im Hintergrund weitergeführt wird und daß diese Regelung nach Behebung der Klopferscheinung wieder fortgeführt wird.

Brennstoffumsatzrate

Figur 1

ΔS = Abstand von α zur
Schwerpunktlage

Sollzustand: A1=A2*Fa
Fa wie definiert drehzahllastabh. Faktor

– – – – Verbrennungsdruck
———— Kompressionsdruck

Figur 2

Kurbelwinkel/°KW

Figur 3